# FASCICULE DE BREVET EUROPEEN

(11) **EP 0 687 432 B1**
(45) Date de publication et mention de la délivrance du brevet: **10.03.1999**
(21) Numéro de dépôt: 95401133.4
(22) Date de dépôt: 16.05.1995
(51) Int. Cl.: A47C 7/40, B60N 2/44

(54) **Elément perfectionné d'armature pour siège, pièce en faisant utilisation et son application notamment à un siège de véhicule**
Sitzgestellelement, Gegenstand unter Verwendung desselben und seine Anwendung insbesondere in einem Fahrzeugsitz
Seat-frame element, article using said element and its application especially to vehicle seats

(30) Priorité: 20.05.1994 FR 9406197
(43) Date de publication de la demande: 20.12.1995
(73) Titulaire: CESA COMPAGNIE EUROPEENNE DE SIEGES POUR AUTOMOBILES, 92307 Levallois-Perret Cédex (FR)
(72) Inventeur: Bourgeois, Bernard, F-58300 Champvert (FR); Fourrey, François, F-45200 Montargis (FR); Quenel, David, F-45570 Dampierre en Burly (FR); Zunino, Eric, F-45200 Montargis (FR)
(74) Mandataire: Obolensky, Michel

(56) Documents cités:
- WO-A-93/16896
- CH-A- 536 703
- DE-A- 4 138 647
- DE-C- 3 831 636
- DE-C- 4 142 789
- DE-U- 8 909 031
- FR-A- 1 213 749

## Description

La présente invention concerne les sièges et, plus particulièrement, ceux d'entre eux à armature métallique, et est relative à une pièce perfectionnée d'armature utilisable notamment pour confectionner un siège de véhicule automobile terrestre.

Comme on le sait les sièges à armature en particulier métallique, sont habituellement faits de constituants mécano-soudés qui sont destinés à porter des coussins. Lorsque de tels sièges doivent être installés à bord de véhicules automobiles terrestres, ces sièges et en particulier leurs armatures doivent satisfaire à des exigences contraignantes quant à leur masse et à leur encombrement notamment, et satisfaire aussi à une réglementation draconienne relative à la sécurité qui est édictée par des instances professionnelles ou les Pouvoirs Publics. Ces exigences sont souvent contradictoires et particulièrement difficiles à satisfaire lorsqu'on sait que de tels sièges doivent être en outre fabriqués à la chaîne à des coûts de production relativement modiques et pourtant respecter aussi des normes de qualités sévères.

Un exemple de solution est proposé par le document FR 2 593 440.

CH-A-536 703 décrit une gouttière en plastique en forme de tube écrasé. DE-A-4 138 647 décrit une armature de siège en forme de U. WO-A-93/16896 décrit une pièce d'armature notamment pour siège comprenant un tube métallique pratiquement cylindrique à contour fermé cintré en U avec deux branches pratiquement parallèles et un pont transversal qui les relie à l'aide de coudes.

Le but de l'invention est de fabriquer un élément d'armature pour siège fait à partir d'un tube déformé satisfaisant aux conditions évoquées ci-dessus.

A cet effet, l'invention a pour objet une pièce d'armature du type décrit dans WO-A-93/16896, caractérisée en ce que chaque branche a, en section droite, une configuration en gouttière avec une face en cuvette et une face opposée pratiquement plane qui est localement au contact de cette face en cuvette, la face en cuvette comprenant un fond pratiquement plan et deux rebords latéraux délimités par deux flancs intérieur et extérieur dont l'un est pratiquement perpendiculaire au fond et l'autre est oblique par rapport au fond, la face opposée formant un dos pratiquement plan en contact avec le fond, le dos et le fond s'étendant, perpendiculairement a un plan général du U parallèle aux branches de ce U, depuis un embout libre de la branche jusqu'au coude relié à cette branche.

L'invention a également pour objet un siège pour véhicule automobile, caractérisé en ce qu'il comprend une pièce d'armature telle que définie ci-dessus et une matelassure munie d'une agrafe emboîtée sur la pièce d'armature par chevauchement de la configuration en gouttière.

D'autres caractéristiques de l'invention ressortiront de la lecture de la description et des revendications qui suivent ainsi que de l'examen du dessin annexé, donné seulement à titre d'exemple, où :
- la figure 1 est une vue perspective schématique partielle d'un mode de réalisation d'une pièce d'armature selon l'invention dans son application à une assise de siège;
- la figure 2 est une vue en coupe transversale locale du mode de réalisation de la figure 1 illustrant la mise en oeuvre de cette pièce d'armature pour le montage par emboîtement d'une matelassure ;
- la figure 3 est une vue de détail partielle analogue à celle de la figure 2 d'une variante d'exécution ; et
- la figure 4 est une vue de détail partielle schématique en coupe axiale locale d'une variante d'exécution d'un mode de réalisation d'une pièce d'armature selon l'invention dans son application à un dossier de siège.

Les sièges en général et ceux en particulier destinés à être montés à bord de véhicules automobiles notamment terrestres ainsi que leurs armatures, étant bien connus dans la technique, on ne décrira par la suite que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. En particulier, il pourra se reporter utilement au document précité.

Dans ce qui suit, on utilise toujours un même numéro de référence pour identifier un organe homologue, quel que soit le mode de réalisation ou sa variante d'exécution.

Pour la commodité de l'exposé, on décrira successivement chacune des particularités d'un élément d'armature conforme à l'invention avant d'en exposer au besoin la fabrication et la mise en oeuvre pour une application particulière visant à son "habillage" avec un coussin.

Comme cela est clairement illustré sur les figures du dessin, un élément d'armature pour siège conforme à l'invention est utilisable pour confectionner une pièce en U qui comprend, essentiellement, deux branches 10 pratiquement parallèles et un pont 20 transversal qui les relie à l'aide de coudes 30 correspondants.

Chaque branche 10 et, s'il y a lieu chaque coude 30, comprend un élément selon l'invention.

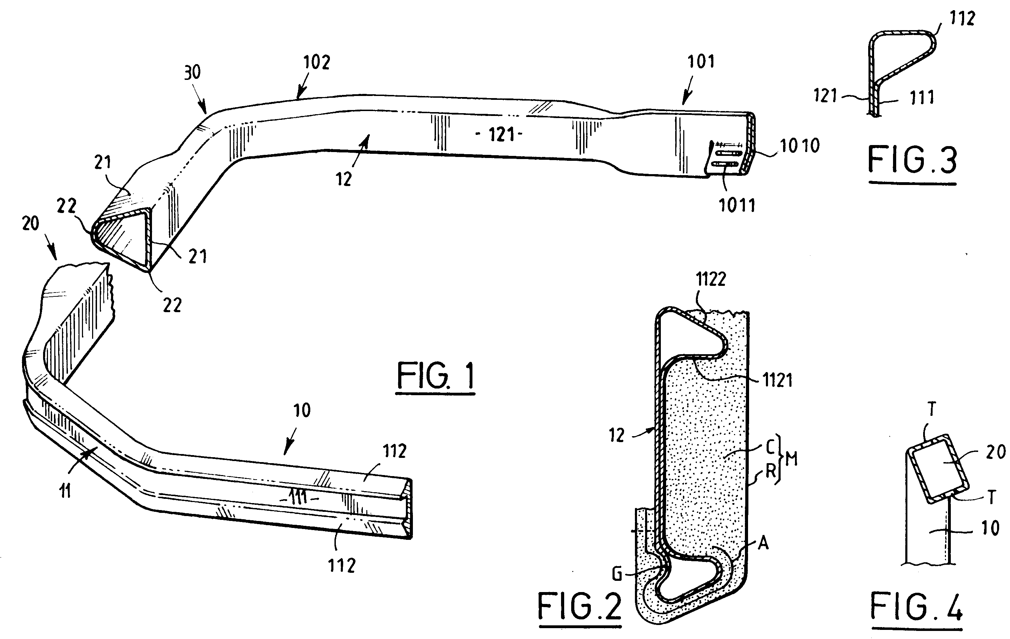

Comme on peut l'observer, chaque branche 10 et au besoin chaque coude 30 comprend un élément qui a, en section droite, une configuration en gouttière avec une face 11 en cuvette et une face 12 opposée plane. La face en cuvette 11 comprend un fond 111 avec deux rebords 112 latéraux délimités chacun par deux flancs inférieurs 1121 et supérieurs 1122 qui sont l'un intérieur ou extérieur, pratiquement perpendiculaire au fond 111 et l'autre extérieur ou intérieur, oblique par rapport au fond 111 comme illustré sur la Figure 2 ou sur la Figure 3, alors que la face opposée plane 12 forme un dos 121 au contact du fond 111. Au moins l'une des branches 10 est terminée par un embout 101 libre sans rebord. S'il y a lieu, l'embout libre 101 est muni d'une patte 1010 pratiquement perpendiculaire à la face opposée plane 12. Au besoin au moins un bossage 1011 est ménagé sur la patte 1010 pour les raisons qui apparaîtront par la suite. De même, s'il y a lieu et de préférence, l'une au moins des branches 10 présente une zone de transition 102 inclinée vers le pont 20, qui la raccorde au coude 30 correspondant.

Le pont 20 a, en section droite, une configuration en polygone avec des côtés 21 rectilignes et des sommets 22 arrondis.

On observera pour le mode de réalisation de la Figure 1 que le pont a une configuration en triangle et que la face opposée plane 12 et un côté rectiligne 21 sont parallèles à une même direction commune et perpendiculaire au plan général du U. De même, on observera que la face opposée plane 12 et le côté rectiligne 21 parallèles à cette direction commune, sont dirigés vers l'intérieur du U.

On observera pour le mode de réalisation de la Figure 4, que le pont a une configuration en rectangle et que les petits côtés rectilignes sont dirigés l'un vers l'intérieur et l'autre vers l'extérieur du U et que ses grands côtés rectilignes sont orientés obliquement au plan du U pour des raisons qui apparaîtront par la suite.

Un tel élément d'armature est confectionné de préférence à partir d'un tube cylindrique à contour fermé, par exemple pratiquement circulaire, métallique qui est cintré et déformé par exemple par pliage et emboutissage, comme il est bien connu et classique pour les opérations de façonnage des tubes métalliques.

Un élément d'armature conforme à l'invention se prête particulièrement bien au montage par emboîtement d'une matelassure de coussin notamment d'assise. En particulier, on peut utiliser une matelassure M qui est faite d'un revêtement R et d'un coussin C, et qui est équipée d'une agrafe A destinée à venir en prise avec la gouttière et spécialement avec un rebord 112 pour le chevaucher et s'y fixer comme cela apparaît particulièrement bien sur la Figure 2. Un tel montage est facilité par exemple par la présence d'une gorge G ou similaire, disposée sur la face 12 et située à l'aplomb de l'un de rebords 112, comme clairement illustré sur la Figure 2. L'agrafe est par exemple métallique ou en matériau synthétique, et est fixée de toutes manières appropriées par exemple au revêtement de la matelassure, ou bien est noyée directement dans le coussin si ce dernier est fait d'une mousse en résine synthétique comme il est classique. Une telle matelassure peut être fabriquée de manière que le revêtement habituellement en tissu et la mousse, soit d'un seul tenant, et obtenu in situ.

En examinant la Figure 2 schématique, on comprend que la matelassure qui arrive d'un seul tenant avec son agrafe, peut être placée facilement sur l'élément d'armature par une simple opération d'emboîtement faite manuellement ou à l'aide d'un robot ou d'un automate. Un tel type de fixation permet de se dispenser d'avoir recours à des capots de masquage et/ou à un fronçage du revêtement.

Le fait d'utiliser un flanc extérieur qui est pratiquement perpendiculaire au dos ou au fond assure une meilleure tenue du coussin. En effet, lors de l'occupation du siège, le poids de l'occupant ne crée pas de force à composante horizontale ayant tendance à "chasser le coussin et en particulier la mousse de celui-ci, qui autrement risquerait de provoquer un déboîtement du coussin.

Le fait de disposer d'une face de même qu'un dos ou fond pratiquement plans facilite la fixation, notamment par soudage, par exemple d'axes ou autres de mécanismes de réglage en inclinaison et/ou hauteur.

Lorsqu'on confectionne une armature de dossier de siège, le fait de disposer d'un pont à configuration en rectangle permet d'y monter facilement un appui-tête, par exemple en faisant des trous notamment par poinçonnage, dans les petits côtés qui sont aptes à recevoir directement des douilles par exemple en matière synthétique. La grande distance qui sépare ces trous permet de satisfaire aux normes de sécurité.

Une armature avec un pont à configuration en triangle ou en rectangle convient indifféremment à un dossier ou à une assise. Lorsqu'on utilise une telle armature avec un pont à configuration en rectangle pour une assise, on fait en sorte, de préférence, que les grands côtés rectilignes sont orientés obliquement au plan du U et dirigés vers le bas lorsqu'on va de l'arrière vers l'avant du siège. Une telle disposition permet de lutter efficacement contre l'effet de "sous-marinage" que subit un occupant en cas de choc à grande composante longitudinale.

On voit donc que grâce à l'invention il est possible de remplacer les armatures traditionnelles en cornières ou en profilés en U mécano-soudés, en partant d'un tube qui est conformé pour lui donner un module d'inertie de flexion I/V (I : moment d'inertie de flexion; V : distance entre la fibre neutre et la fibre la plus comprimée ou la plus tendue) optimal en rejetant l'essentiel de la matière loin de l'âme qui est "pleine" alors que les rebords latéraux restent creux. Ceci permet d'obtenir une résistance améliorée à la flexion des branches, appréciable en particulier pour la confection des armatures de dossier et/ou d'assise. Ceci permet d'obtenir une réduction notable de l'encombrement latéral, appréciée notamment pour les véhicules de petites tailles.

Un élément d'armature selon l'invention trouve une application particulière pour la confection de sièges qui sont montés à bord de véhicules en particulier automobiles terrestres.

Les pattes permettent la fixation d'autres constituants d'un siège par exemple des traverses de renfort et/ou de rigidification. Les bossages autorisent une fixation facile par soudage.

Ce qui précède met bien en lumière les particularités distinctives de l'invention, l'intérêt qu'elle offre et les avantages qu'elle procure.

## Revendications

1. Pièce d'armature notamment pour siège comprenant un tube métallique pratiquement cylindrique à contour fermé cintré en U avec deux branches (10) pratiquement parallèles et un pont (20) transversal qui les relie à l'aide de coudes (30), **caractérisée en ce que** chaque branche (10) a, en section droite, une configuration en gouttière avec une face (11) en cuvette et une face opposée (12) pratiquement plane qui est localement au contact de cette face (11) en cuvette, la face en cuvette (11) comprenant un fond (111) pratiquement plan et deux rebords (112) latéraux délimités par deux flancs (1121,1122) intérieur et extérieur dont l'un est pratiquement perpendiculaire au fond (111) et l'autre est oblique par rapport au fond (111), la face opposée (12) formant un dos (121) pratiquement plan en contact avec le fond (111), le dos (121) et le fond (111) s'étendant, perpendiculairement a un plan général du U parallèle aux branches (10) de ce U, depuis un embout libre (101) de la branche (10) jusqu'au coude (30) relié à cette branche.

2. Pièce selon la revendication 1, caractérisée en ce que le flanc intérieur (1121) est pratiquement perpendiculaire au fond (111) et le flanc extérieur (1122) est oblique par rapport au fond (111).

3. Pièce selon la revendication 1, caractérisée en ce que le flanc intérieur (1121) est oblique par rapport au fond (111) et le flanc extérieur (1122) est pratiquement perpendiculaire au fond (111).

4. Pièce selon l'une quelconque des revendications 1 à 3, caractérisée en ce que la configuration en gouttière des branches (10) se prolonge tout le long des coudes (30).

5. Pièce selon l'une quelconque des revendications 1 à 4, caractérisée en ce que la face opposée (12) est dirigée vers l'intérieur du U.

6. Pièce selon l'une quelconque des revendications 1 à 5, caractérisée en ce que l'une au moins des branches (10) est terminée par un embout (101) libre sans rebord.

7. Pièce selon la revendication 6, caractérisée en ce que l'embout libre (101) est muni d'une patte (1010) pratiquement perpendiculaire à la face opposée (12).

8. Pièce selon l'une quelconque des revendications 1 à 7, caractérisée en ce que l'une au moins des branches (10) présente une zone de transition (102) inclinée vers le pont (20) qui la raccorde au coude (30) correspondant.

9. Pièce selon l'une quelconque des revendications 1 à 8, caractérisée en ce que, en section droite, le pont (20) a une configuration en polygone avec des côtés (21) rectilignes et des sommets (22) arrondis.

10. Pièce selon la revendication 9, caractérisée en ce que le polygone est un triangle, et en ce qu'un premier de ses côtés rectilignes (21) et la face opposée (12) sont parallèles à une même direction commune.

11. Pièce selon la revendication 10, caractérisée en ce que le premier côté rectiligne (21) est dirigé vers l'intérieur du U.

12. Pièce selon la revendication 11, caractérisée en ce que le polygone est un rectangle, en ce que ses petits côtés rectilignes sont dirigés l'un vers l'intérieur et l'autre vers l'extérieur du U et en ce que ses grands côtés rectilignes sont orientés obliquement au plan du U.

13. Siège pour véhicule automobile, caractérisé en ce qu'il comprend une pièce d'armature selon l'une quelconque des revendications 1 à 12 et une matelassure (M) munie d'une agrafe (A) emboîtée sur la pièce d'armature par chevauchement de la configuration en gouttière.

## Claims

1. Frame member in particular for a seat, comprising a virtually cylindrical metal tube with a closed contour bent in a U-shape with two sides (10) which are virtually parallel and a transverse bridge (20) which connects them by means of bends (30), characterised in that each side (10) has, in cross-section, a gutter-shaped configuration with a dish-shaped side (11) and a virtually flat opposite side (12) which is locally in contact with this dish-shaped side (11), the dish-shaped side (11) comprising a virtually flat base (111) and two side rims (112) defined by two inner and outer cheeks (1121, 1122), whereof one is virtually perpendicular to the base (111) and the other is oblique with respect to the base (111), the opposite side (12) forming a virtually flat back (121) in contact with the base (111), the back (121) and the base (111) extending, perpendicularly to a general plane of the U parallel to the sides (10) of this U, from a free end-piece (101) of the side (10) as far as the bend (30) connected to this side.

2. Member according to Claim 1, characterised in that the inner cheek (1121) is virtually perpendicular to the base (111) and the outer cheek (1122) is oblique with respect to the base (111).

3. Member according to Claim 1, characterised in that the inner cheek (1121) is oblique with respect to the base (111) and the outer cheek (1122) is virtually perpendicular to the base (111).

4. Member according to one of Claims 1 to 3, characterised in that the gutter-like configuration of the sides (10) extends over the entire length of the bends (30).

5. Member according to one of Claims 1 to 4, characterised in that the opposite side (12) is directed towards the inside of the U.

6. Member according to one of Claims 1 to 5, characterised in that at least one of the sides (10) is terminated by a free end-piece (101) without a rim.

7. Member according to Claim 6, characterised in that the free end-piece (101) is provided with a lug (1010) virtually perpendicular to the opposite side (12).

8. Member according to one of Claims 1 to 7, characterised in that at least one of the sides (10) has a transition zone (102) inclined towards the bridge (20) which connects it to the corresponding bend (30).

9. Member according to one of Claims 1 to 8, characterised in that, in cross-section, the bridge (20) has a polygon-like configuration with rectilinear sides (21) and rounded vertices (22).

10. Member according to Claim 9, characterised in that the polygon is a triangle and in that a first of its rectilinear sides (21) and the opposite side (12) are parallel to the same common direction.

11. Member according to Claim 10, characterised in that the first rectilinear side (21) is directed towards the inside of the U.

12. Member according to Claim 11, characterised in that the polygon is a rectangle, in that its small rectilinear sides are directed one towards the inside and the other towards the outside of the U and in that its large rectilinear sides are oriented obliquely with respect to the plane of the U.

13. Seat for a motor vehicle, characterised in that it comprises a frame member according to one of Claims 1 to 12 and a cushion (M) provided with a fastener (A) fitted on the frame member by overlapping of the gutter-shaped configuration.

## Patentansprüche

1. Sitzgestellelement insbesondere für einen Sitz, welches ein weitgehend zylindrisches Metallrohr mit einem geschlossenen Profil aufweist, das U-förmig gebogen ist, und mit zwei weitgehend parallelen Schenkeln (10) und einem Querträger (20) ausgestattet ist, welcher sie über Kniestücke (30) miteinander verbindet,
**dadurch gekennzeichnet**, **daß**
jeder der Schenkel (10) über seinen geraden Querschnitt die Form einer Schiene hat, bei der die eine Seite (11) schalenförmig gestaltet ist, während die gegenüberliegende Seite (12) weitgehend flach ist und lokal mit der schalenförmigen Fläche (11) in Berührung steht, wobei diese schalenförmige Fläche (11) einen weitgehend flachen Boden (111) und zwei Seitenränder (112) aufweist, welche von zwei inneren und äußeren Flanken (1121, 1122) eingegrenzt werden, von denen die eine weitgehend senkrecht zu dem Boden (111) verläuft, während die andere Flanke quer zu diesem Boden (111) ausgerichtet ist, und in dem die gegenüberliegende Seite (12) einen weitgehend flachen Rückenteil (121) bildet, der mit dem Boden (111) in Berührung steht, wobei sich der Rückenteil (121) und der Boden (111) senkrecht zu einer allgemeinen Ebene des U-förmigen Profils parallel zu den Schenkeln (10) dieses U-förmigen Profils von einem freien Ansatzstück (101) des Schenkels (10) bis zu dem diesen Schenkel verbindenden Kniestück (30) erstreckt.

2. Sitzgestellelement nach Anspruch 1,
**dadurch gekennzeichnet, daß**
die innere Flanke (1121) weitgehend senkrecht zu dem Boden (111) angeordnet ist, während die äußere Flanke (1122) weitgehend quer zu dem Boden (111) ausgerichtet ist.

3. Sitzgestellelement nach Anspruch 1,
**dadurch gekennzeichnet, daß**
die innere Flanke (1121) quer zu dem Boden (111) verläuft, während die äußere Flanke (1122) weitgehend senkrecht zu dem Boden (111) angeordnet ist.

4. Sitzgestellelement nach einem der Ansprüche 1 bis 3,
**dadurch gekennzeichnet, daß**
sich die schienenförmige Konfiguration der Schenkel (10) über die gesamte Länge der Kniestücke (30) erstreckt.

5. Sitzgestellelement nach einem der Ansprüche 1 bis 4,
**dadurch gekennzeichnet, daß**
die gegenüberliegende Seite (12) gegen die Innenseite des U-förmigen Profils gerichtet ist.

6. Sitzgestellelement nach einem der Ansprüche 1 bis 5,
**dadurch gekennzeichnet, daß**
mindestens einer der Schenkel (101 in einem freien randlosen Ansatzstück (101) endet.

7. Sitzgestellelement nach Anspruch 6,
**dadurch gekennzeichnet, daß**
das freie Ansatzstück (101) mit einer Klaue (1010) versehen ist, welche weitgehend senkrecht zu der gegenüberliegenden Seite (12) angeordnet ist.

8. Sitzgestellelement nach einem der Ansprüche 1 bis 7,
**dadurch gekennzeichnet, daß**
mindestens einer der Schenkel (10) einen gegenüber dem Querträger (20) geneigten Übergangsbereich (102) aufweist welcher ihn mit dem entsprechenden Kniestück (30) verbindet.

9. Sitzgestellelement nach einem der Ansprüche 1 bis 8,
**dadurch gekennzeichnet, daß**
der Querträger (20) über seinen geraden Querschnitt eine polygonale Konfiguration mit geraden Seiten (21) und abgerundeten Scheiteln (22) besitzt.

10. Sitzgestellelement nach Anspruch 9,
**dadurch gekennzeichnet, daß**
dieses Polygon ein Dreieck ist, und dadurch. daß die erste seiner Seiten (21) und die gegenüberliegende Seite (12) parallel zueinander in einer gemeinsamen Richtung verlaufen.

11. Sitzgestellelement nach Anspruch 10,
**dadurch gekennzeichnet, daß**
die erste gerade Seite (21) gegen die Innenseite des U-förmigen Profils gerichtet ist.

12. Sitzgestellelement nach Anspruch 11,
**dadurch gekennzeichnet, daß**
dieses Polygon ein Rechteck ist, und dadurch, daß die eine seiner geraden Schmalseiten gegen die Innenseite und seine andere Schmalseite gegen die Außenseite des U-förmigen Profils gerichtet ist, und dadurch, daß seine großen geraden Seiten quer zur Ebene des U-förmigen Profils angeordnet sind.

13. Sitz für ein Kraftfahrzeug,
**dadurch gekennzeichnet, daß**
er ein Sitzgestellelement nach einem der Ansprüche 1 bis 12, sowie eine mit einer Agraffe (A) ausgestattete Polsterung (M) enthält, welche in das Sitzgestellelement eingesteckt wird und sattelförmig die schienenförmige Konfiguration überspannt.
